# EUROPEAN PATENT SPECIFICATION

(11) **EP 3 010 214 B1**
(45) Date of publication and mention of the grant of the patent: **11.12.2019**
(21) Application number: 15193665.5
(22) Date of filing: 07.07.2010
(51) Int. Cl.: H04M 1/725, H04M 1/247

(54) **PUSHED CONTENT NOTIFICATION AND DISPLAY**
FORCIERTE INHALTSBENACHRICHTIGUNG UND ANZEIGE
NOTIFICATION DE CONTENU ENVOYE ET AFFICHAGE

(43) Date of publication of application: 20.04.2016
(62) Divisional of application: 10168742.4
(73) Proprietor: BlackBerry Limited, Waterloo, ON N2K 0A7 (CA)
(72) Inventor: Schultz, Charles Peter, Sunrise, FL 33323 (US); Talwalker, Rohit Anil, Sunrise, FL 33323 (US); Danger, Jenco, Sunrise, FL 33323 (US); Iyer, Kannan Narayanan, Sunrise, FL 33323 (US)
(74) Representative: Hanna Moore + Curley

(56) References cited:
- US-A1- 2006 014 523
- US-A1- 2009 305 732

## Description

### FIELD OF THE TECHNOLOGY

The technology disclosed herein relates to presentation of new content via a communication device. Exemplary implementations of the technology are presented in the context of a mobile communications device and its enterprise network.

### BACKGROUND

US2009/0305732 relates to a mobile device showing icons of applications on a display and having a favourite applications bar which is always shown in different screens, and badges or notification identifiers at icons indicating that a message was recently received by the corresponding application.

US2006/014523 relates to a mobile device having screen for displaying local or remote content, local content without accessible links is shown when the device is out of coverage.

### SUMMARY

The invention is set out in the appended claims.

### BRIEF DESCRIPTION OF THE DRAWINGS

FIG. 1 illustrates a communication system including a mobile communication device to which example implementations of the technology can be applied.
FIG. 2 illustrates an Updates tab of a Home part of a social software application.
FIG. 3 illustrates an exemplary mobile communication device used in implementations of the technology.
FIG. 4 illustrates a device, such as in FIG. 3, in detail.
FIG. 5 illustrates a device home screen of the present technology.
FIG. 6 illustrates a status updates page of the present technology.
FIG. 7 illustrates a page flow of the present technology.
FIG. 8 illustrates methods of the technology.

### DETAILED DESCRIPTION

Reference will now be made in detail to implementations of the technology. Each example is provided by way of explanation of the technology only, not as a limitation of the technology. It will be apparent to those skilled in the art that various modifications and variations can be made in the present technology. For instance, features described as part of one implementation of the technology can be used on another implementation to yield a still further implementation. Thus, it is intended that the present technology cover such modifications and variations that come within the scope of the technology.

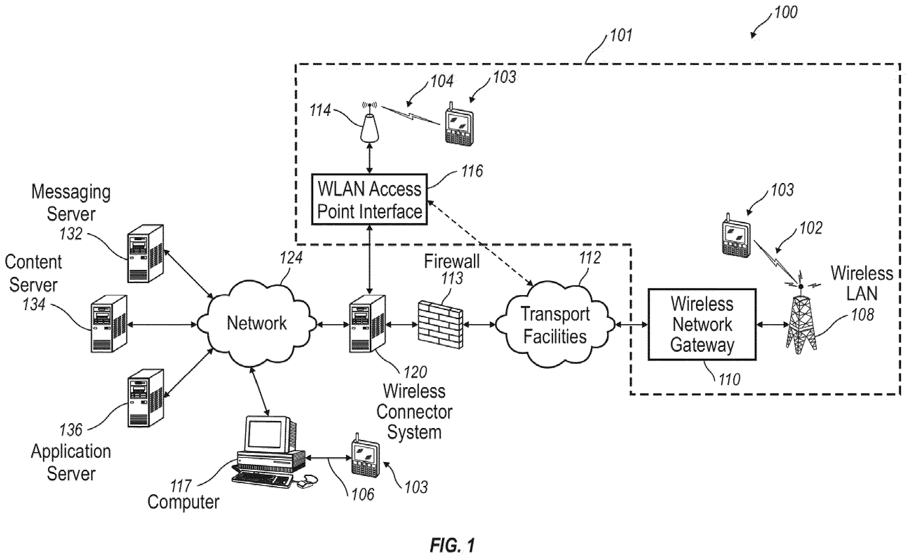

In order to facilitate an understanding of environments in which example implementations described herein can operate, reference is made to FIG. 1, which shows, in block diagram form, a communication system **100** in which implementations of the technology can be applied. The communication system **100** may comprise a number of mobile communication devices **103** that may be connected to the remainder of system **100** in any of several different ways. Accordingly, several instances of mobile communication devices **103** are depicted in FIG. 1 employing different example ways of connecting to system **100**.

These figures are exemplary only, and those persons skilled in the art will appreciate that additional elements and modifications may be necessary to make the communication device, e.g., **103** operable in particular network environments. While in the illustrated implementations, the communication devices, e.g., **103** may comprise smart phones, in other implementations, the communication devices may comprise personal digital assistants (PDA), tablet computers, laptop computers, desktop computers, servers, or other communication devices capable of sending and receiving electronic messages.

Mobile communication devices **103** are connected to a wireless network **101** that may comprise one or more of a Wireless Wide Area Network (WWAN) **102** and a Wireless Local Area Network (WLAN) **104** or other suitable network arrangements. In some implementations, the mobile communication devices **103** are configured to communicate over both the WWAN **102** and WLAN **104**, and to roam between these networks. In some implementations, the wireless network **101** may comprise multiple WWANs **102** and WLANs **104**.

The WWAN **102** may be implemented as any suitable wireless access network technology. By way of example, but not limitation, the WWAN **102** may be implemented as a wireless network that includes a number of transceiver base stations **108** where each of the base stations **108** provides wireless Radio Frequency (RF) coverage to a corresponding area or cell. The WWAN **102** is typically operated by a mobile network service provider that provides subscription packages to users of the mobile communication devices **103**. In some implementations, the WWAN **102** conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN **102** may further comprise a wireless network gateway **110** that connects the mobile communication devices **103** to transport facilities **112**, and through the transport facilities **112** to a wireless connector system **120**. Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an internal or enterprise network (e.g., an intranet) and its resources, or the wireless connector system **120** may be operated by a mobile network provider. In some implementations, the network **124** may be realized using the Internet rather than, or in addition to, an internal or enterprise network.

The wireless network gateway **110** provides an interface between the wireless connector system **120** and the WWAN **102**, which facilitates communication between the mobile communication devices **103** and other devices (not shown) connected, directly or indirectly, to the WWAN **102**. Accordingly, communications sent via the mobile communication devices **103** are transported via the WWAN **102** and the wireless network gateway **110** through transport facilities **112** to the wireless connector system **120**. Communications sent from the wireless connector system **120** are received by the wireless network gateway **110** and transported via the WWAN **102** to the mobile communication devices **103**.

The WLAN **104** comprises a wireless network that, in some implementations, conforms to IEEE 802.1 lx standards (sometimes referred to as Wi-Fi TM) such as, for example, the IEEE 802.11a, 802.11b and/or 802.11g standard. Other communication protocols may be used for the WLAN **104** in other implementations such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN **104** includes one or more wireless RF Access Points (AP) **114** (one of which is shown in FIG. 1) that collectively provide a WLAN coverage area.

The WLAN **104** may be a personal network of the user, an enterprise network, or a hotspot offered by an internet service provider (ISP), a mobile network provider, or a property owner in a public or semi-public area, for example. The access points **114** are connected to an access point (AP) interface **116** that may connect to the wireless connector system **120** directly, (for example, if the access point **114** is part of an enterprise WLAN **104** in which the wireless connector system **120** resides), or indirectly, as indicated by the dashed line in FIG. 1, via the transport facilities **112** if the access point **114** is a personal Wi-Fi network or Wi-Fi hotspot (in which case a mechanism for securely connecting to the wireless connector system **120**, such as a virtual private network (VPN), may be used). The AP interface **116** provides translation and routing services between the access points **114** and the wireless connector system **120** to facilitate communication, directly or indirectly, with the wireless connector system **120**.

The wireless connector system **120** may be implemented as one or more servers, and is typically located behind a firewall **113**. The wireless connector system **120** manages communications, including email, Hypertext Transfer Protocol (HTTP), and HTTP Secure (HTTPS) communications to and from a set of managed mobile communication devices **103**. The wireless connector system **120** also provides administrative control and management capabilities over users and mobile communication devices **103** that might connect to the wireless connector system **120**.

The wireless connector system **120** allows the mobile communication devices **103** to access the network **124** and connected resources and services such as a messaging server **132** (for example, a Microsoft Exchange Server®, IBM Lotus Domino®, or Novell GroupWise™ email server), a content server **134** for providing content such as Internet content or content from an organization's internal servers, application servers **136** for implementing server-based applications such as instant messaging (IM) applications to mobile communication devices **103**, and intranet file services.

The wireless connector system **120** typically provides a secure exchange of data (e.g., email messages, personal information manager (PIM) data, and IM data) with the mobile communication devices **103**. In some implementations, communications between the wireless connector system **120** and the mobile communication devices **103** are encrypted. In some implementations, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some implementations, the private encryption key is stored only in the user's mailbox on the messaging server **132** and on the mobile communication device **103**, and can typically be regenerated by the user on mobile communication devices **103**. Data sent to the mobile communication devices **103** is encrypted by the wireless connector system **120** using the private encryption key retrieved from the user's mailbox. The encrypted data, when received on the mobile communication devices **103,** is decrypted using the private encryption key stored in memory. Similarly, data sent to the wireless connector system **120** from the mobile communication devices **103** is encrypted using the private encryption key stored in the memory of the mobile communication device **103**. The encrypted data, when received on the wireless connector system **120**, is decrypted using the private encryption key retrieved from the user's mailbox.

The wireless network gateway **110** is adapted to send data packets received from the mobile communication device **103** over the WWAN **102** to the wireless connector system **120**. The wireless connector system **120** then sends the data packets to the appropriate connection point such as the messaging server **132** or content servers **134** or application server **136**. Conversely, the wireless connector system **120** sends data packets received, for example, from the messaging server **132** or content servers **134** or application servers **136** to the wireless network gateway **110** that then transmit the data packets to the destination mobile communication device **103**. The AP interfaces **116** of the WLAN **104** provide similar sending functions between the mobile communication device **103**, the wireless connector system **120** and network connection point such as the messaging server **132**, content server **134** and application server **136**.

The network **124** may comprise a private local area network, metropolitan area network, wide area network, the public Internet or combinations thereof and may include virtual networks constructed using any of these, alone, or in combination. A mobile communication device **103** may alternatively connect to the wireless connector system **120** using a computer **117**, such as desktop or notebook computer, via the network **124**. A link **106** may be provided for exchanging information between the mobile communication device **103** and a computer **117** connected to the wireless connector system **120**. The link **106** may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the mobile communication device **103** and computer **117**. The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the BLUETOOTH special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices **103**. Suitable variations of the communication system will be understood to a person of skill in the art and are intended to fall within the scope of the present disclosure.

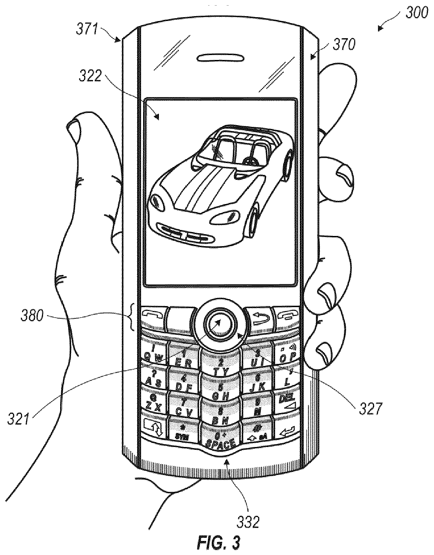

As will be appreciated from FIG. 3, an exemplary mobile communication device **300** (as an example of **103**) comprises a display **322** located above a keyboard **332** constituting a user input means that is suitable for accommodating textual input to the device **300**. In some implementations, the keyboard **332** can be part of a touch screen display. The front face **370** of the device **300** has a navigation row **380**. As shown, the device **300** is of uni-body construction, also known as a "candy-bar" design.

The device **300** may include an auxiliary input that acts as a cursor navigation tool **327** and that may be also exteriorly located upon the front face **370** of the device **300**. The front face location of a cursor navigation tool **327** allows the tool to be thumb-actuable, e.g., like the keys of the keyboard **332**. Some implementations of the technology provide the navigation tool **327** in the form of a trackball **321** that may be utilized to instruct two-dimensional screen cursor movement in substantially any direction, as well as act as an actuator when the trackball **321** is depressed like a button. Other implementations can provide the navigation tool in the form of a trackpad, a touchpad, a pointing stick, joystick, graphics tablet, or combinations thereof. The placement of the navigation tool **327** can be above the keyboard **332** and below the display screen **322**; here, it may avoid interference during keyboarding and does not block the operator's view of the display screen **322** during use.

The device **300** may be configured to send and receive messages. The device **300** includes a body **371** that can, in some implementations, be configured to be held in one hand by an operator of the device **300** during text entry. A display **322** is included that is located on a front face **370** of the body **371** and upon which information is displayed to the operator, e.g., during text entry. The device **300** may also be configured to send and receive voice communications such as mobile telephone calls. The device **300** also can include a camera (not shown) to allow the device **300** to take electronic photographs that can be referred to as photos or pictures. Further, the device **300** can be configured to operate a web browser.

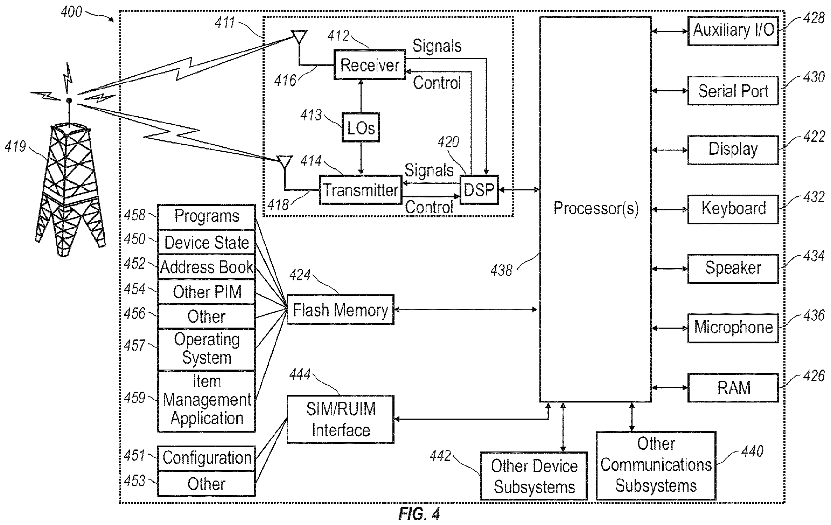

Referring to FIG. 4, a block diagram of a communication device, such as **300** and **103**, in accordance with an exemplary implementation is illustrated. As shown, the device **400** includes a microprocessor **438** that controls the operation of the communication device **400**. A communication subsystem **411** performs communication transmission and reception with the wireless network **419**. The microprocessor **438** further can be communicatively coupled with an auxiliary input/output (I/O) subsystem **428** that can be communicatively coupled to the communication device **400**. In at least one implementation, the microprocessor **438** can be communicatively coupled to a serial port (for example, a Universal Serial Bus port) **430** that can allow for communication with other devices or systems via the serial port **430**. A display **422** (e.g., **322**) can be communicatively coupled to microprocessor **438** to allow for display of information to an operator of the communication device **400**. When the communication device **400** is equipped with a keyboard **432** (e.g., **332**), the keyboard can also be communicatively coupled with the microprocessor **438**. The communication device **400** can include a speaker **434**, a microphone **436**, random access memory (RAM) **426**, and flash memory **424**, all of which may be communicatively coupled to the microprocessor **438**. Other similar components may be provided on the communication device **400** as well and optionally communicatively coupled to the microprocessor **438**. Other communication subsystems **440** and other communication device subsystems **442** are generally indicated as being functionally connected with the microprocessor **438** as well. An example of a communication subsystem **440** is a short range communication system such as BLUETOOTH® communication module or a WI-FI® communication module (a communication module in compliance with IEEE 802.11b) and associated circuits and components. Additionally, the microprocessor **438** is able to perform operating system functions and enables execution of programs on the communication device **400**. In some implementations not all of the above components are included in the communication device **400**. For example, in at least one implementation, the keyboard **432** is not provided as a separate component and is instead integrated with a touch screen as described below.

The auxiliary I/O subsystem **428** can take the form of a variety of different navigation tools (multi-directional or single-directional) such as a trackball navigation tool **321**, as illustrated in the exemplary implementation shown in FIG. 3, or a thumbwheel, a navigation pad, a joystick, touch-sensitive interface, or other I/O interface. These navigation tools may be located on the front surface of the communication device **400** or may be located on any exterior surface of the communication device **400**. Other auxiliary I/O subsystems may include external display devices and externally connected keyboards (not shown). While the above examples have been provided in relation to the auxiliary I/O subsystem **428**, other subsystems capable of providing input or receiving output from the communication device **400** are considered within the scope of this disclosure. Additionally, other keys may be placed along the side of the communication device **300** to function as escape keys, volume control keys, scrolling keys, power switches, or user programmable keys, and may likewise be programmed accordingly.

The keyboard **432** can include a plurality of keys that can be of a physical nature such as actuable buttons, or they can be of a software nature, typically constituted by representations of physical keys on a display **422** (referred to herein as "virtual keys"). It is also contemplated that the user input can be provided as a combination of the two types of keys. Each key of the plurality of keys is associated with at least one action which can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display **422**, which in one implementation is enabled by touching the display **422**, for example, with a stylus, finger, finger tip, finger nail, or other pointer, to generate the character or activate the indicated command or function. Some examples of displays **422** capable of detecting a touch include resistive, capacitive, projected capacitive, infrared and surface acoustic wave (SAW) touch screens.

Physical and virtual keys can be combined in many different ways as appreciated by those skilled in the art. In one implementation, physical and virtual keys are combined such that the plurality of enabled keys for a particular program or feature of the communication device **400** is shown on the display **422** in the same configuration as the physical keys. Using this configuration, the operator can select the appropriate physical key corresponding to what is shown on the display **422**. Thus, the desired character, command or function is obtained by depressing the physical key corresponding to the character, command or function displayed at a corresponding position on the display **422**, rather than touching the display **422**.

Furthermore, the communication device **400** is equipped with components to enable operation of various programs, as shown in FIG. 4. In an exemplary implementation, the flash memory **424** is enabled to provide a storage location for the operating system **457**, device programs **458**, and data. The operating system **457** is generally configured to manage other programs **458** that are also stored in memory **424** and executable on the processor **438**. The operating system **457** honors requests for services made by programs **458** through predefined program **458** interfaces. More specifically, the operating system **457** typically determines the order in which multiple programs **458** are executed on the processor **438** and the execution time allotted for each program **458**, manages the sharing of memory **424** among multiple programs **458**, handles input and output to and from other device subsystems **442**, and so on. In addition, operators can typically interact directly with the operating system **457** through a user interface usually including the keyboard **432** and display **422**. While in an exemplary implementation the operating system **457** is stored in flash memory **424**, the operating system **457** in other implementations is stored in read-only memory (ROM) or similar storage element (not shown). As those skilled in the art will appreciate, the operating system **457**, device program **458**, or parts thereof, may be loaded in RAM **426** or other volatile memory.

In some implementations, the flash memory **424** may contain programs **458** for execution on the device **400**, including - but not limited to - an address book **452**, a personal information manager (PIM) **454**, and a device state **450**. Furthermore, programs **458**, such as social software, and other information **456** including data can be segregated upon storage in the flash memory **424** of the device **400**.

When the communication device **400** is enabled for two-way communication within the wireless communication network **419**, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device **400** may use a unique identifier to enable the communication device **400** to transmit and receive signals from the communication network **419**. Other systems may not use such identifying information. GPRS, UMTS, and EDGE use a Subscriber Identity Module (SIM) in order to allow communication with the communication network **419**. Likewise, most CDMA systems use a Removable User Identity Module (RUIM) in order to communicate with the CDMA network. The RUIM and SIM card can be used in multiple different communication devices **400**. The communication device **400** can be configured to operate some features without a SIM/RUIM card, but it will not necessarily be able to communicate with the network **419**. A SIM/RUIM interface **444** located within the communication device **400** allows for removal or insertion of a SIM/RUIM card (not shown). The SIM/RUIM card features memory and holds key configurations **451**, and other information **453** such as identification and subscriber related information. With a properly enabled communication device **400**, two-way communication between the communication device **400** and communication network **419** is possible.

If the communication device **400** is enabled as described above or the communication network **419** does not use such enablement, the two-way communication enabled communication device **400** is able to both transmit and receive information from the communication network **419**. The transfer of communication can be from the communication device **400** or to the communication device **400**. In order to communicate with the communication network **419**, the device **400** can be equipped with an integral or internal antenna **418** for transmitting signals to the communication network **419**. Likewise the device **400** can be equipped with another antenna **416** for receiving communication from the communication network **419**. These antennae (**416**, **418**) in another exemplary implementation are combined into a single antenna (not shown). As one skilled in the art would appreciate, the antenna or antennae (**416**, **418**) in another implementation can be externally mounted on the communication device **400**.

When equipped for two-way communication, the communication device **400** features a communication subsystem **411**. As is understood in the art, this communication subsystem **411** is modified so that it can support the operational needs of the communication device **400**. The subsystem **411** includes a transmitter **414** and receiver **412** including the associated antenna or antennae (**416**, **418**) as described above, local oscillators (LOs) **413**, and a processing module that in the presently described exemplary implementation is a digital signal processor (DSP) **420**.

It is contemplated that communication by the communication device **400** with the wireless network **419** can be any type of communication that both the wireless network **419** and communication device **400** are enabled to transmit, receive and process. In general, these can be classified as voice or data, or both voice and data. Voice communication generally refers to communication in which signals for audible sounds are transmitted by the communication device **400** through the communication network **419**. Data generally refers to all other types of communication that the communication device **400** is capable of performing within the constraints of the wireless network **419**.

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the communication device **400** is enhanced when connectable within a communication system, and when connectable on a wireless basis in a network **419** in which voice, text messaging, and other data transfer are accommodated. Device **400** can include programs such as a web browser, a file browser, and client programs for interacting with server programs. Devices, e.g., **103**, **300**, **400**, for use in the technology can be characterized by an identification number assigned to the device. Such identification numbers cannot be changed and are locked to each device.

Implementations of the technology can be realized as programming across the architectural elements identified in FIG. 1, FIG. 3, and FIG. 4. In some implementations, the programming is entirely on the mobile communications device **103**. In some implementations, programming for the technology is on the mobile communications device **103**, while data used by the mobile communications device **103** is on the wireless connector system **120** or a network server such as content server **134**, messaging server **132**, or application server **136**. In some implementations, programming for the technology can be realized on a remote server. Allocation of functionality among architectural elements can be a function of several factors including latency, processing resource availability and efficient usage, storage availability and efficient usage, and revenue opportunities.

Social software encompasses a range of software systems that allow users to interact and share data. This computer-mediated communication has become very popular with social sites like MySpace®, Facebook™ and Bebo™, media sites like Flickr® and YouTube™, as well as commercial sites like Amazon.com® and eBay®. Many of these applications share characteristics like open application programming interfaces (APIs), service-oriented design, and the ability to upload data and media. The terms "Web 2.0" and (for large-business applications) Enterprise 2.0, are also used to describe this style of software. The more specific terms "collaborative software" and "groupware" are usually applied to software that enables collaborative work. Distinctions among usage of the terms "social," "trusted," and "collaborative" are in the applications or uses, not the tools themselves, although some tools are used only rarely for collaborative work.

IBM Lotus ® Connections is an example of a social software application. Lotus Connections has ten parts: Homepage - a portal site that can federate information from many sources; Profiles - a social network service - primarily used to find people in the organization; Communities - a collaborative space for people with common interests to work together; Blogs - a blogging service; Bookmarks - a social bookmarking service; Activities - a task management tool for groups of people to work together on a specific project or task; Files - a content library for storing, sharing and revision management of computer files; Wikis - a Wiki system for publishing and editing content; Tags - for describing and organizing information, content, and people; and Microblogs - for keeping the extended network apprised of status, etc.

Modules are built on a set of services according to the service-oriented architecture concept. These modules take the form of applications which are hosted on an application server. This design allows the modules to be hosted independently of each other, combined with each other, or interact with each other, in support of very large scale deployments.

The Homepage serves as a portal for users' social collaboration. Out of the box, Lotus Connections provides seven components that can be individually installed, enabled and/or customized by the user. Information Technology (IT) Administrators can add new components, applications or widgets for use by users. The Homepage module also includes a recent updates display which shows changes such as new content posts and status updates which are relevant to the user. A system to update the user's status via microblogging is also provided.

The Profiles module provides an online directory of people within an organization. People can be located in different ways, such as by: keywords, names, responsibilities, interests, projects they are part of, their expertise, their business relationships, tags applied to their profile, and their geographical location. A profile typically contains a person's name, job role, base location, reporting chain and details about the Lotus Connection bookmarks, activities, communities and blogs in which the person participates. Profiles can also be customized and new fields added.

The Activities module is a task management system that enables groups of people to collaborate on a task. Activities may be structured in a nested tree hierarchy where entries, to-do items and sections branch off from the root activity. Any non-section entity in an activity can contain rich-text and custom fields for files, links, text, people and dates. To-Do items can also have a due date and the name of each person assigned to the To-Do task.

The Wikis module can facilitate the collaborative creation of web content.

The Files module is a file-sharing service that can be used to upload and share files, tag them, and recommend/comment on them.

The Communities module enables ad-hoc and planned collaboration around a project or area of interest. A Connections Community can have its own blog, forums, bookmarks, activities, feeds, member list, Wiki and Files.

The Blogs service allows a user to present ideas, get feedback from others, and learn from the expertise and experience of others who blog. A blog can be created for the use of the members of a community. Videos, links and images can be embedded in a blog posting.

The Bookmarks social bookmarking service permits users to save, organize, and share bookmarks; and also discover bookmarks that have been qualified by others. Browser bookmarks or subsets of browser bookmarks can be imported into the Bookmarks service. This can prove useful when initially populating a bookmarks list in the Bookmarks service, or updating it with a new topic of interest. Bookmarks can also be exported from the Bookmarks service and imported into a browser or shared with someone who does not use the Bookmarks service.

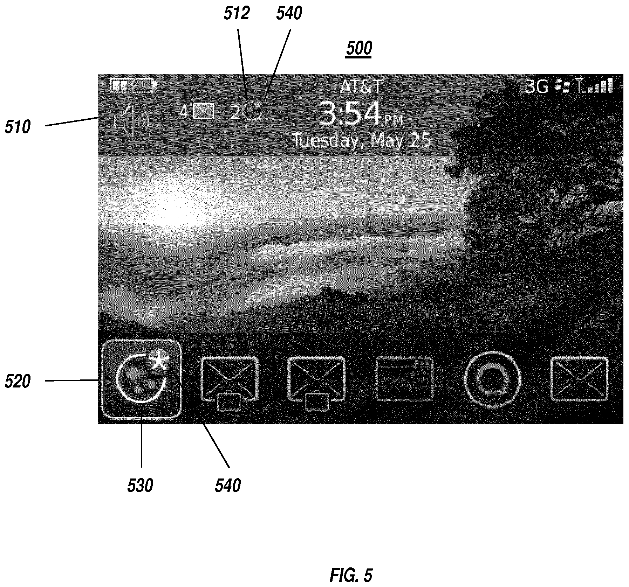

New content (e.g., a status update, an article from an aggregator service, an instant message, an e-mail, a new/updated wiki or blog entry, a change to a collaboratively created/edited document, a new forum post) can be pushed to a mobile device to be accessed by a user of a social software application. Typical social software applications provide some notification of new content pushed to a device. Referring to FIG. 5, a home screen **500** of a mobile device (e.g., **103**, **300**, **400**) is shown. The home screen **500** includes a header **510** and a footer **520**. The footer **520** displays an icon for each of several applications, including an icon **530** for Lotus Connections. The arrival of new content can be indicated by an asterisk **540** (e.g., white) on a solid color (e.g., red) circular background, located, for example, in the upper right quadrant, e.g., superscript position of an icon, e.g., icon **530**. Given that footer **520** is not always shown on a typical mobile device home screen **500**, the arrival of new content can be indicated by an asterisk **540** in mini-icon **512** of the device home screen header **510**. In addition, a notification of the arrival of new content can be given using one or more other graphical indicators, sound, vibration, haptic feedback, transmission or publication of a notification to one or more other applications (e.g. a social networking and microblogging application such as Twitter or a user's email account), a window that clears upon the device receiving acknowledgement and/or a window that clears upon the device receiving other input (e.g., a splat). When the application is opened, e.g., by the device receiving selection of an icon, e.g., **530**, the device can display further indication of which feature of the application contains the newly pushed content. Beyond that, however, the user is left to navigate within the application to find the new content.

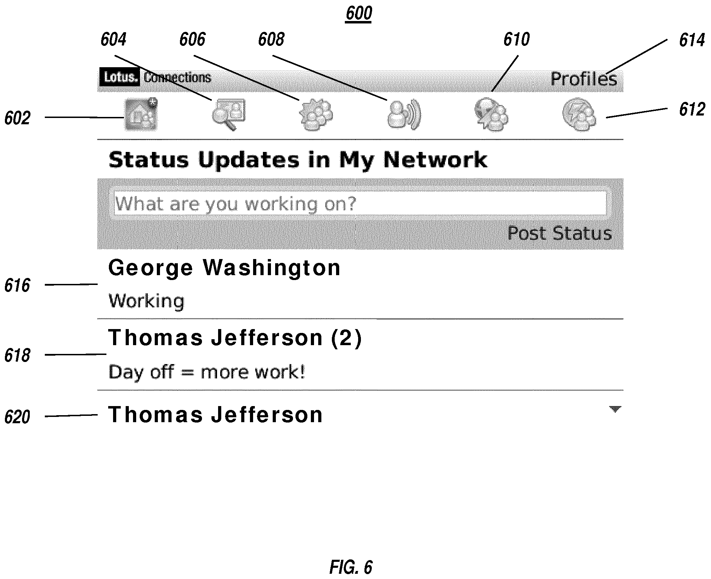

FIG. 6 illustrates a Status Updates in My Network screen **600** of the Connections application using the present technology. The screen **600** includes icons for application parts, i.e., Homepage **602**, Profiles **604**, Communities **606**, Blogs **608**, Bookmarks **610**, and Activities **612**. The screen **600** displays updates for the Profiles part of Lotus Connections, as indicated by title **614**. Status updates **616**, **618**, and **620** are displayed. Homepage icon **602** displays a new update notification as a white asterisk in a red circle in the upper right corner of the Homepage icon **602**.

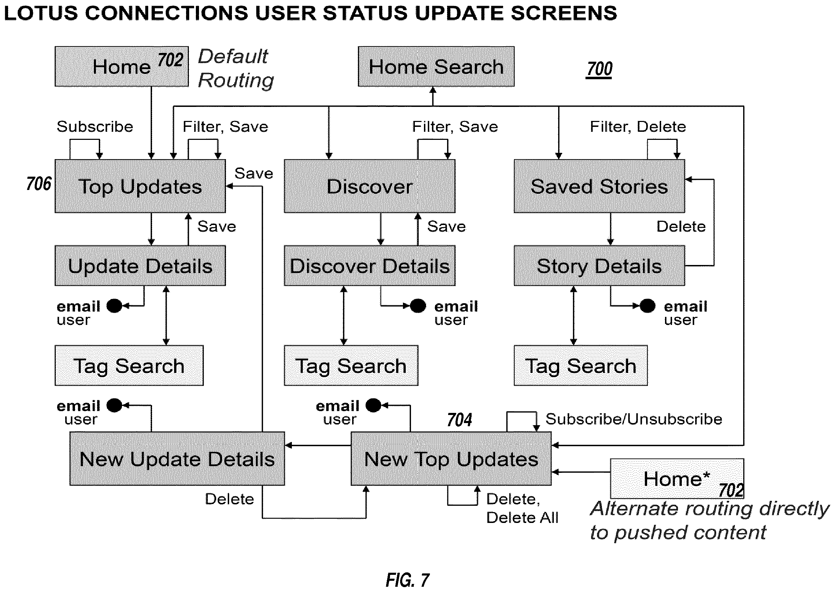

Applications and functions within applications typically have a "landing page" that can provide a consistent or predictable screen that can be displayed in order to help orient a user for further navigation. Content below the landing page can provide different and interconnected paths to additional screens. The landing page can differ for each major function or component (usually indicated by a distinct navigation icon). The landing page can be the most recent page displayed by the application. Referring to FIG. 7, a navigation diagram **700** of the present technology is shown. Upon a complete restart of the application, the application Homepage **702** (as distinguished from the device home screen, e.g., **500**) can be the landing page.

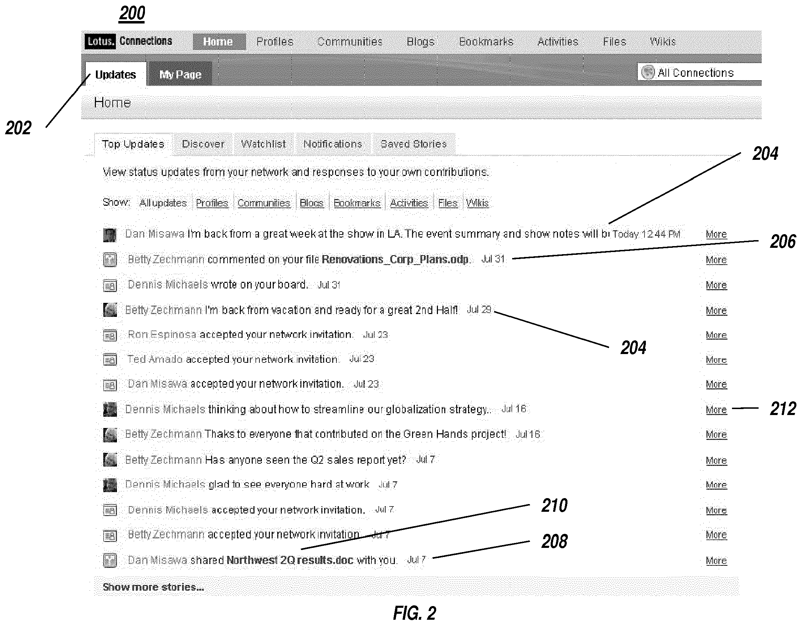

The application can display a new content listing. Referring to FIG. 2, an Updates tab **202** of a Lotus Connections Homepage **200** is shown. The illustrated listing identifies new content to various Lotus Connections parts, e.g., a status update to a Profile **204**, a comment on a File **206**. Where the new content itself is susceptible to being displayed, e.g., the status update **204**, such new content can be displayed directly, or by use of a scrolling marquee. Where the new content is less susceptible to being displayed directly, e.g., a newly shared document **208**, a link **210** to the new content can be displayed. In each case, a link to more information, e.g., **212** can be presented by the device.

In some mobile communication device software architectures, a user may have to navigate to an application (e.g., via icon **530**), and within an application further navigate (e.g., via icon **602**, to page **200** or similar, and via link **212**) to retrieve new content for which the user has received a notification. An application may have additional content to download once the user chooses to access the content related to the notification, e.g., via link **212**. Particularly when a mobile device is out of coverage, this action may be impossible. In some cases when the device is out of coverage, the user may be required to navigate through several pages of unusable/incomplete information to reach the notifications and new content that has been pushed to the device. Some solutions may utilize the main phone screen to display pushed content as it arrives. This approach can get cluttered when multiple applications or feeds are subscribed to.

In some implementations, the technology receives new content and presents a notification of received new content via the device. The notification can be in the form of one or more of text, graphics, audio, haptics, transmission of a message, etc. In particular implementations, the notification is an asterisk on a solid color circular background displayed in superscript over at least one of an application icon, a mini icon, an application part/module icon. Upon receiving selection of the notification, the technology can directly display a listing of new notifications. When the device is out of coverage, the technology can offer navigation paths that relate only to content available on the device.

The technology can improve the reachability of pushed content by controlling which screen the technology displays when a notification of pushed content has been selected. In some implementations, the technology directly displays a list of new content, which list would otherwise be several page navigation steps away from other landing screens of the application. Navigation is further improved by the technology in the situation when the device is out of coverage by taking the user directly to the page(s) that contain the locally stored pushed content, bypassing screens that rely on over-the-air data retrieval.

Referring to FIG. 6, FIG. 7, and TABLE 1, the performance of some implementation of the technology is described. In these implementations, audio alert for new content notifications has been enabled on the mobile device.

In the situation of TABLE 1 Ref. 1-4 with the device in coverage, an audio alert sounds upon receiving notification of new content. Where the application i.e., Lotus Connections, is open and the listing of new content, i.e., "New Top Updates" (NTU) **704** is the current displayed screen, no notification is added to the Homepage icon **602** and the new content listing is added to NTU screen **704**. If the NTU page **704** is the current landing page of the application, but the application is the background, then the screen is not refreshed and the notification is added to the Homepage icon **602**. Where the application is open and any screen other than the NTU screen **704**, e.g., the Top Updates (TU) screen **706,** is displayed, a notification is added to the Homepage icon **602** and the Top Updates screen **706** remains the displayed screen. Upon receiving selection of the Homepage icon **602**, the NTU screen **704** is displayed by the technology. When the device is in coverage and the application is not open, upon receiving a notification of new content, the technology can display a new content notification on at least one of the application mini icon **540** and the application main icon **530**. Upon receiving selection of either icon **540**, **530**, or selection of any other form of actionable notification such as a link, an icon embedded in an email, or a message in some other social software the technology can display the NTU screen **704**.

In the situations of TABLE 1 Ref. 5-8 with the device out of coverage, no additional notifications can be received. However, notifications previously received, and any pushed content associated therewith, can be presented by the technology. For example, when the application is not open, yet content had been pushed to the device while the device was in coverage, but the content list has not been displayed, both the application mini icon **512** and the application main icon **530** will display with a notification of new pushed content. Selection of either icon **530**, **512** will cause the technology to display the NTU screen **704** in response. If the application is open and the NTU screen **704** is displayed while the device is out of coverage, then no indication of new content will be present at the application icon **530** or the application mini icon **512**. If the TU screen **706** (or any screen other than the NTU screen **704**) is displayed under those circumstances, then the application icon **530**, the application mini icon **512**, and the Homepage icon **602** will indicate new content, and selection of each icon will prompt the technology to display the NTU screen **704**.

**TABLE 1**

| Ref. | In Coverage? | App. Open? | Current Screen | Behavior |
|---|---|---|---|---|
| 1 | Y | Y | NTU | Alert sounds. No star added to Homepage icon. New items added to current (NTU) screen. |
| 2 | Y | Y | TU | Alert sounds, Homepage icon gets star, Stay in current screen (TU), Click Homepage icon to see content in NTU |
| 3 | Y | Y | Other | Alert sounds, Homepage icon gets star, Stay in current screen (Other), Click Homepage icon to see content in NTU |
| 4 | Y | N | N/A | Alert sounds, Connections mini-icon with splat on top of screen, Connections main icon with splat, Open app: no star added to Homepage icon, Go directly to NTU screen, New items added to NTU screen |
| 5 | N | N | N/A | Connections mini-icon with splat on top of screen, Connections main icon with splat, Open app: Homepage icon has star, Top Update list items unchanged, Go directly to NTU screen, New items added to NTU screen |
| 6 | N | Y | NTU | No star on Homepage icon Stay in NTU screen while in "Homepage" Homepage icon goes to NTU Other icons try to retrieve the usual content |
| 7 | N | Y | TU | Homepage icon has star unless visited since last update Homepage icon goes to NTU Stay in NTU screen while in "Homepage" Other icons try to retrieve the usual content |
| 8 | N | Y | Other | Homepage icon has star unless visited since last update Homepage icon goes to NTU Stay in NTU screen while in "Homepage" Other icons try to retrieve the usual content |

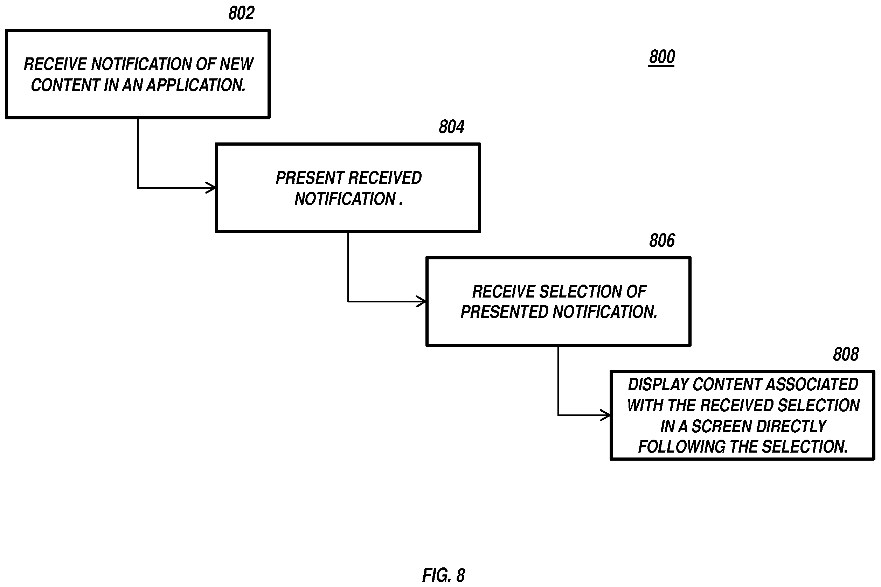

Referring to FIG. 8, methods **800** of the technology are illustrated. The methods can be embodied as computer implemented methods, can be embodied in a communication device, and can be embodied in a computer program product. Methods **800** begin with receiving notification of new content within an application at a device **802**. The received notification is presented at the device **804**. Presenting the notification can be done within the application, outside the application, or both within and outside the application. Examples of notification presented outside the application include posting notification on a social network, posting notification to a web site, posting a message to a user's avatar in a virtual world, posting notification in a video conferencing session, posting notification in a web conference session, posting notification in an instant messaging session, posting notification in an email, and posting notification in a video game that the user is playing. Presentation can be by various means disclosed herein, including audio, visual, and haptic. Upon receiving selection of a presented notification **806**, the new content can be displayed in the screen directly following such selection **808**. In some implementations, displaying the new content in the screen directly following receiving the selection of the notification comprises displaying only the new content stored on the device. Displaying only the new pushed content stored on the device can reduce the number of screens, including non-applicable screens, that a user must navigate to access the content that is available.

The technology can take the forms of hardware, software or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), DVD, and Blu Ray™. Both processors and program code for implementing each as aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

## Claims

1. A computer-implemented method (800) for presenting a notification of received pushed content on a home screen (500) of a device, the home screen comprising a header (510) and a footer (520), the method comprising:
displaying at least one icon (530) in the footer (520) on a device user interface, each icon corresponding to a respective application;
receiving the notification of the received pushed content for an application at the device (802), the notification being received when the device is in coverage;
presenting the notification using a first indicator on the icon (530) corresponding to the application;
displaying a mini-icon (512) corresponding to the application in the header (510);
presenting the notification using a second indicator at the mini-icon (512), the second indicator at the mini icon being displayable when the footer is not shown;
receiving a selection of the icon having the first indicator (806) or the mini-icon having the second indicator; and
navigating, when the device is out of coverage and upon receiving selection of the icon having the first indicator or the mini-icon having the second indicator, directly to a screen that contains locally stored pushed content.

2. The computer-implemented method of Claim 1, wherein receiving the notification of the received pushed content at the device (802) comprises:
posting a notification on a social network,
posting a notification to a web site, or
posting a message to a user's avatar in a virtual world.

3. A computer-implemented method (800) for presenting a notification of received pushed content on a home screen (500) of a device, the home screen comprising a header (510) and a footer (520), the method comprising:
displaying at least one icon (530) in the footer (520) on a device user interface, each icon corresponding to a respective application;
receiving the notification of the received pushed content for an application at the device (802), the notification being received when the device is in coverage;
presenting the notification using a first indicator on the icon (530) corresponding to the application;
displaying a mini-icon (512) corresponding to the application in the header (510);
presenting the notification using a second indicator at the mini-icon (512), the second indicator at the mini icon being displayable when the footer is not shown;
receiving a selection of the icon having the first indicator (806) or the mini-icon having the second indicator; and
navigating, when the device is out of coverage and upon receiving selection of the icon having the first indicator or the mini-icon having the second indicator, directly to a screen that contains navigation paths that relate only to the pushed content available on the device.

4. The computer-implemented method of Claim 3, wherein receiving the notification of the received pushed content at the device (802) comprises:
posting a notification on a social network,
posting a notification to a web site, or
posting a message to a user's avatar in a virtual world.

5. A mobile communication device having a user interface, the mobile communication device comprising:
at least one processor;
at least one computer readable medium in communication with the processor; and
a program module for presenting a notification of received pushed content on a home screen (500), the home screen comprising a header (510) and a footer (520), the program module being stored on the at least one medium and being executable to:
display at least one icon (530) in the footer (520) on the user interface, each icon corresponding to a respective application;
receive the notification of the received pushed content for an application at the mobile communication device (802), the notification being received when the device is in coverage;
present the notification using a first indicator on the icon (530) corresponding to the application;
display a mini-icon (512) corresponding to the application in the header (510);
present the notification using a second indicator at the mini-icon (512), the second indicator at the mini icon being displayable when the footer is not shown;
receive a selection of the icon having the first indicator (806) or the mini-icon having the second indicator; and
navigate, when the device is out of coverage and upon receiving selection of the icon having the first indicator or the mini-icon having the second indicator, directly to a screen that contains locally stored pushed content.

6. The mobile communication device of Claim 5, wherein presenting the notification of the received pushed content at the mobile communication device (804) comprises:
posting a notification on a social network,
posting a notification to a web site, or
posting a message to a user's avatar in a virtual world.

7. A mobile communication device having a user interface, the mobile communication device comprising:
at least one processor;
at least one computer readable medium in communication with the processor; and
a program module for presenting a notification of received pushed content on a home screen (500), the home screen comprising a header (510) and a footer (520), the program module being stored on the at least one medium and being executable to:
display at least one icon (530) in the footer (520) on the user interface, each icon corresponding to a respective application;
receive the notification of the received pushed content for an application at the mobile communication device (802), the notification being received when the device is in coverage;
present the notification using a first indicator on the icon (530) corresponding to the application;
display a mini-icon (512) corresponding to the application in the header (510);
present the notification using a second indicator at the mini-icon (512), the second indicator at the mini icon being displayable when the footer is not shown;
receive a selection of the icon having the first indicator (806) or the mini-icon having the second indicator; and
navigate, when the device is out of coverage and upon receiving selection of the icon having the first indicator or the mini-icon having the second indicator, directly to a screen that contains navigation paths that relate only to the pushed content available on the device.

8. The mobile communication device of Claim 7, wherein presenting the notification of the received pushed content at the mobile communication device (804) comprises:
posting a notification on a social network,
posting a notification to a web site, or
posting a message to a user's avatar in a virtual world.

9. A computer program product for a mobile communication device having a user interface, the computer program product comprising:
at least one computer readable medium; and
at least one program module for presenting a notification of received pushed content on a home screen (500), the home screen comprising a header (510) and a footer (520), the at least one program module being stored on the at least one medium, and being executable to:
display at least one icon (530) in the footer (520) on the user interface, each icon corresponding to a respective application;
receive the notification of the received pushed content for an application at the mobile communication device (802), the notification being received when the device is in coverage;
present the notification using a first indicator on the icon corresponding to the application;
display a mini-icon (512) corresponding to the application in the header (510);
present the notification using a second indicator at the mini-icon (512), the second indicator at the mini icon being displayable when the footer is not shown;
receive a selection of the icon having the first indicator (806) or the mini-icon having the second indicator; and
navigate, when the device is out of coverage and upon receiving selection of the icon having the first indicator or the mini-icon having the second indicator, directly to a screen that contains locally stored pushed content.

10. The computer program product of Claim 9, wherein presenting the notification of the received pushed content at the mobile communication device comprises:
posting a notification on a social network,
posting a notification to a web site, or
posting a message to a user's avatar in a virtual world.

11. A computer program product for a mobile communication device having a user interface, the computer program product comprising:
at least one computer readable medium; and
at least one program module for presenting a notification of received pushed content on a home screen (500), the home screen comprising a header (510) and a footer (520), the at least one program module being stored on the at least one medium, and being executable to:
display at least one icon (530) in the footer (520) on the user interface, each icon corresponding to a respective application;
receive the notification of the received pushed content for an application at the mobile communication device (802), the notification being received when the device is in coverage;
present the notification using a first indicator on the icon corresponding to the application;
display a mini-icon (512) corresponding to the application in the header (510);
present the notification using a second indicator at the mini-icon (512), the second indicator at the mini icon being displayable when the footer is not shown;
receive a selection of the icon having the first indicator (806) or the mini-icon having the second indicator; and
navigate, when the device is out of coverage and upon receiving selection of the icon having the first indicator or the mini-icon having the second indicator, directly to a screen that contains navigation paths that relate only to the pushed content available on the device.

12. The computer program product of Claim 11, wherein presenting the notification of the received pushed content at the mobile communication device comprises:
posting a notification on a social network,
posting a notification to a web site, or
posting a message to a user's avatar in a virtual world.

## Patentansprüche

1. Computerimplementiertes Verfahren (800) zum Darstellen einer Benachrichtigung über einen empfangenen gepushten Inhalt auf einem Startbildschirm (500) einer Vorrichtung, wobei der Startbildschirm eine Kopfzeile (510) und eine Fußzeile (520) umfasst, wobei das Verfahren umfasst:
Anzeigen mindestens eines Symbols (530) in der Fußzeile (520) auf einer Benutzerschnittstelle der Vorrichtung, wobei jedes Symbol einer jeweiligen Anwendung entspricht;
Empfangen der Benachrichtigung über den empfangenen gepushten Inhalt für eine Anwendung auf der Vorrichtung (802), wobei die Benachrichtigung empfangen wird, wenn sich die Vorrichtung in einem Bedeckungsgebiet befindet;
Darstellen der Benachrichtigung unter Verwendung eines ersten Indikators auf dem Symbol (530), das der Anwendung entspricht;
Anzeigen eines Mini-Symbols (512), das der Anwendung entspricht, in der Kopfzeile (510);
Darstellen der Benachrichtigung unter Verwendung eines zweiten Indikators auf dem Mini-Symbol (512), wobei der zweite Indikator auf dem Mini-Symbol anzeigbar ist, wenn die Fußzeile nicht gezeigt wird;
Empfangen einer Auswahl des Symbols mit dem ersten Indikator (806) oder des Mini-Symbols mit dem zweiten Indikator; und
wenn sich die Vorrichtung außerhalb des Bedeckungsgebiets befindet, und nach Empfangen einer Auswahl des Symbols mit dem ersten Indikator oder des Mini-Symbols mit dem zweiten Indikator, Navigieren, direkt zu einem Bildschirm, der einen lokal gespeicherten gepushten Inhalt enthält.

2. Computerimplementiertes Verfahren nach Anspruch 1, wobei das Empfangen der Benachrichtigung über den empfangenen gepushten Inhalt an der Vorrichtung (802) umfasst:
Ausgeben einer Benachrichtigung in einem sozialen Netzwerk,
Ausgeben einer Benachrichtigung auf einer Website oder
Ausgeben einer Benachrichtigung an einen Avatar eines Benutzers in einer virtuellen Welt.

3. Computerimplementiertes Verfahren (800) zum Darstellen einer Benachrichtigung über einen empfangenen gepushten Inhalt auf einem Startbildschirm (500) einer Vorrichtung, wobei der Startbildschirm eine Kopfzeile (510) und eine Fußzeile (520) umfasst, wobei das Verfahren umfasst:
Anzeigen mindestens eines Symbols (530) in der Fußzeile (520) auf einer Benutzerschnittstelle der Vorrichtung, wobei jedes Symbol einer jeweiligen Anwendung entspricht;
Empfangen der Benachrichtigung über den empfangenen gepushten Inhalt für eine Anwendung auf der Vorrichtung (802), wobei die Benachrichtigung empfangen wird, wenn sich die Vorrichtung in einem Bedeckungsgebiet befindet;
Darstellen der Benachrichtigung unter Verwendung eines ersten Indikators auf dem Symbol (530), das der Anwendung entspricht;
Anzeigen eines Mini-Symbols (512), das der Anwendung entspricht, in der Kopfzeile (510);
Darstellen der Benachrichtigung unter Verwendung eines zweiten Indikators auf dem Mini-Symbol (512), wobei der zweite Indikator auf dem Mini-Symbol anzeigbar ist, wenn die Fußzeile nicht gezeigt wird;
Empfangen einer Auswahl des Symbols mit dem ersten Indikator (806) oder des Mini-Symbols mit dem zweiten Indikator; und
wenn sich die Vorrichtung außerhalb des Bedeckungsgebiets befindet, und nach Empfangen einer Auswahl des Symbols mit dem ersten Indikator oder des Mini-Symbols mit dem zweiten Indikator, Navigieren, direkt zu einem Bildschirm, der Navigationspfade enthält, die nur mit dem auf der Vorrichtung verfügbaren gepushten Inhalt verbunden sind.

4. Computerimplementiertes Verfahren nach Anspruch 3, wobei das Empfangen der Benachrichtigung über den empfangenen gepushten Inhalt an der Vorrichtung (802) umfasst:
Ausgeben einer Benachrichtigung in einem sozialen Netzwerk,
Ausgeben einer Benachrichtigung auf einer Website oder
Ausgeben einer Benachrichtigung an einen Avatar eines Benutzers in einer virtuellen Welt.

5. Mobile Kommunikationsvorrichtung mit einer Benutzerschnittstelle, wobei die mobile Kommunikationsvorrichtung umfasst:
mindestens einen Prozessor;
mindestens ein computerlesbares Medium in Kommunikation mit dem Prozessor; und
ein Programmmodul zum Darstellen einer Benachrichtigung von einem empfangenen gepushten Inhalt auf einem Startbildschirm (500), wobei der Startbildschirm eine Kopfzeile (510) und eine Fußzeile (520) umfasst, wobei das Programmmodul auf dem mindestens einen Medium gespeichert ist und ausführbar ist, um:
mindestens ein Symbol (530) in der Fußzeile (520) auf der Benutzerschnittstelle anzuzeigen, wobei jedes Symbol einer jeweiligen Anwendung entspricht;
die Benachrichtigung über den empfangenen gepushten Inhalt für eine Anwendung auf der mobilen Kommunikationsvorrichtung (802) zu empfangen, wobei die Benachrichtigung empfangen wird, wenn sich die Vorrichtung in einem Bedeckungsgebiet befindet;
die Benachrichtigung unter Verwendung eines ersten Indikators auf dem Symbol (530) darzustellen, das der Anwendung entspricht;
ein Mini-Symbol (512), das der Anwendung entspricht, in der Kopfzeile (510) anzuzeigen;
die Benachrichtigung unter Verwendung eines zweiten Indikators auf dem Mini-Symbol (512) darzustellen, wobei der zweite Indikator auf dem Mini-Symbol anzeigbar ist, wenn die Fußzeile nicht gezeigt wird;
eine Auswahl des Symbols mit dem ersten Indikator (806) oder des Mini-Symbols mit dem zweiten Indikator zu empfangen; und
wenn sich die Vorrichtung außerhalb des Bedeckungsgebiets befindet, und nach Empfangen einer Auswahl des Symbols mit dem ersten Indikator oder des Mini-Symbols mit dem zweiten Indikator, direkt zu einem Bildschirm zu navigieren, der einen lokal gespeicherten gepushten Inhalt enthält.

6. Mobile Kommunikationsvorrichtung nach Anspruch 5, wobei das Darstellen der Benachrichtigung über den empfangenen gepushten Inhalt an der mobilen Kommunikationsvorrichtung (804) umfasst:
Ausgeben einer Benachrichtigung in einem sozialen Netzwerk,
Ausgeben einer Benachrichtigung auf einer Website oder
Ausgeben einer Benachrichtigung an einen Avatar eines Benutzers in einer virtuellen Welt.

7. Mobile Kommunikationsvorrichtung mit einer Benutzerschnittstelle, wobei die mobile Kommunikationsvorrichtung umfasst:
mindestens einen Prozessor;
mindestens ein computerlesbares Medium in Kommunikation mit dem Prozessor; und
ein Programmmodul zum Darstellen einer Benachrichtigung von einem empfangenen gepushten Inhalt auf einem Startbildschirm (500), wobei der Startbildschirm eine Kopfzeile (510) und eine Fußzeile (520) umfasst, wobei das Programmmodul auf dem mindestens einen Medium gespeichert ist und ausführbar ist, um:
mindestens ein Symbol (530) in der Fußzeile (520) auf der Benutzerschnittstelle anzuzeigen, wobei jedes Symbol einer jeweiligen Anwendung entspricht;
die Benachrichtigung über den empfangenen gepushten Inhalt für eine Anwendung auf der mobilen Kommunikationsvorrichtung (802) zu empfangen, wobei die Benachrichtigung empfangen wird, wenn sich die Vorrichtung in einem Bedeckungsgebiet befindet;
die Benachrichtigung unter Verwendung eines ersten Indikators auf dem Symbol (530) darzustellen, das der Anwendung entspricht;
ein Mini-Symbol (512), das der Anwendung entspricht, in der Kopfzeile (510) anzuzeigen;
die Benachrichtigung unter Verwendung eines zweiten Indikators auf dem Mini-Symbol (512) darzustellen, wobei der zweite Indikator auf dem Mini-Symbol anzeigbar ist, wenn die Fußzeile nicht gezeigt wird;
eine Auswahl des Symbols mit dem ersten Indikator (806) oder des Mini-Symbols mit dem zweiten Indikator zu empfangen; und
wenn sich die Vorrichtung außerhalb des Bedeckungsgebiets befindet, und nach Empfangen einer Auswahl des Symbols mit dem ersten Indikator oder des Mini-Symbols mit dem zweiten Indikator, direkt zu einem Bildschirm zu navigieren, der Navigationspfade enthält, die nur mit dem auf der Vorrichtung verfügbaren gepushten Inhalt verbunden sind.

8. Mobile Kommunikationsvorrichtung nach Anspruch 7, wobei das Darstellen der Benachrichtigung über den empfangenen gepushten Inhalt an der mobilen Kommunikationsvorrichtung (804) umfasst:
Ausgeben einer Benachrichtigung in einem sozialen Netzwerk,
Ausgeben einer Benachrichtigung auf einer Website oder
Ausgeben einer Benachrichtigung an einen Avatar eines Benutzers in einer virtuellen Welt.

9. Computerprogrammprodukt für eine mobile Kommunikationsvorrichtung mit einer Benutzerschnittstelle, wobei das Computerprogrammprodukt umfasst:
mindestens ein computerlesbares Medium; und
mindestens ein Programmmodul zum Darstellen einer Benachrichtigung von einem empfangenen gepushten Inhalt auf einem Startbildschirm (500), wobei der Startbildschirm eine Kopfzeile (510) und eine Fußzeile (520) umfasst, wobei das mindestens eine Programmmodul auf dem mindestens einen Medium gespeichert ist und ausführbar ist, um:
mindestens ein Symbol (530) in der Fußzeile (520) auf der Benutzerschnittstelle anzuzeigen, wobei jedes Symbol einer jeweiligen Anwendung entspricht;
die Benachrichtigung über den empfangenen gepushten Inhalt für eine Anwendung auf der mobilen Kommunikationsvorrichtung (802) zu empfangen, wobei die Benachrichtigung empfangen wird, wenn sich die Vorrichtung in einem Bedeckungsgebiet befindet;
die Benachrichtigung unter Verwendung eines ersten Indikators auf dem Symbol darzustellen, das der Anwendung entspricht;
ein Mini-Symbol (512), das der Anwendung entspricht, in der Kopfzeile (510) anzuzeigen;
die Benachrichtigung unter Verwendung eines zweiten Indikators auf dem Mini-Symbol (512) darzustellen, wobei der zweite Indikator auf dem Mini-Symbol anzeigbar ist, wenn die Fußzeile nicht gezeigt wird;
eine Auswahl des Symbols mit dem ersten Indikator (806) oder des Mini-Symbols mit dem zweiten Indikator zu empfangen; und
wenn sich die Vorrichtung außerhalb des Bedeckungsgebiets befindet, und nach Empfangen einer Auswahl des Symbols mit dem ersten Indikator oder des Mini-Symbols mit dem zweiten Indikator, direkt zu einem Bildschirm zu navigieren, der einen lokal gespeicherten gepushten Inhalt enthält.

10. Computerprogrammprodukt nach Anspruch 9, wobei das Darstellen der Benachrichtigung über den empfangenen gepushten Inhalt an der mobilen Kommunikationsvorrichtung umfasst:
Ausgeben einer Benachrichtigung in einem sozialen Netzwerk,
Ausgeben einer Benachrichtigung auf einer Website oder
Ausgeben einer Benachrichtigung an einen Avatar eines Benutzers in einer virtuellen Welt.

11. Computerprogrammprodukt für eine mobile Kommunikationsvorrichtung mit einer Benutzerschnittstelle, wobei das Computerprogrammprodukt umfasst:
mindestens ein computerlesbares Medium; und
mindestens ein Programmmodul zum Darstellen einer Benachrichtigung von einem empfangenen gepushten Inhalt auf einem Startbildschirm (500), wobei der Startbildschirm eine Kopfzeile (510) und eine Fußzeile (520) umfasst, wobei das mindestens eine Programmmodul auf dem mindestens einen Medium gespeichert ist und ausführbar ist, um:
mindestens ein Symbol (530) in der Fußzeile (520) auf der Benutzerschnittstelle anzuzeigen, wobei jedes Symbol einer jeweiligen Anwendung entspricht;
die Benachrichtigung über den empfangenen gepushten Inhalt für eine Anwendung auf der mobilen Kommunikationsvorrichtung (802) zu empfangen, wobei die Benachrichtigung empfangen wird, wenn sich die Vorrichtung in einem Bedeckungsgebiet befindet;
die Benachrichtigung unter Verwendung eines ersten Indikators auf dem Symbol darzustellen, das der Anwendung entspricht;
ein Mini-Symbol (512), das der Anwendung entspricht, in der Kopfzeile (510) anzuzeigen;
die Benachrichtigung unter Verwendung eines zweiten Indikators auf dem Mini-Symbol (512) darzustellen, wobei der zweite Indikator auf dem Mini-Symbol anzeigbar ist, wenn die Fußzeile nicht gezeigt wird;
eine Auswahl des Symbols mit dem ersten Indikator (806) oder des Mini-Symbols mit dem zweiten Indikator zu empfangen; und
wenn sich die Vorrichtung außerhalb des Bedeckungsgebiets befindet, und nach Empfangen einer Auswahl des Symbols mit dem ersten Indikator oder des Mini-Symbols mit dem zweiten Indikator, direkt zu einem Bildschirm zu navigieren, der Navigationspfade enthält, die nur mit dem auf der Vorrichtung verfügbaren gepushten Inhalt verbunden sind.

12. Computerprogrammprodukt nach Anspruch 11, wobei das Darstellen der Benachrichtigung über den empfangenen gepushten Inhalt an der mobilen Kommunikationsvorrichtung umfasst:
Ausgeben einer Benachrichtigung in einem sozialen Netzwerk,
Ausgeben einer Benachrichtigung auf einer Website oder
Ausgeben einer Benachrichtigung an einen Avatar eines Benutzers in einer virtuellen Welt.

## Revendications

1. Procédé mis en œuvre par ordinateur (800) pour présenter une notification d'un contenu poussé reçu sur un écran d'accueil (500) d'un dispositif, l'écran d'accueil comprenant un en-tête (510) et un pied de page (520), le procédé comprenant :
afficher au moins une icône (530) dans le pied de page (520) sur une interface utilisateur de dispositif, chaque icône correspondant à une application respective ;
recevoir la notification du contenu poussé reçu pour une application au niveau du dispositif (802), la notification étant reçue lorsque le dispositif est en couverture ;
présenter la notification en utilisant un premier indicateur sur l'icône (530) correspondant à l'application ;
afficher une mini-icône (512) correspondant à l'application dans l'en-tête (510) ;
présenter la notification en utilisant un second indicateur au niveau de la mini-icône (512), le second indicateur au niveau de la mini-icône étant affichable lorsque le pied de page n'est pas représenté ;
recevoir une sélection de l'icône ayant le premier indicateur (806) ou de la mini-icône ayant le second indicateur ; et
naviguer, lorsque le dispositif est hors couverture et dès la réception d'une sélection de l'icône ayant le premier indicateur ou de la mini-icône ayant le second indicateur, directement vers un écran qui contient un contenu poussé stocké localement.

2. Procédé mis en œuvre par ordinateur selon la revendication 1, dans lequel la réception de la notification du contenu poussé reçu au niveau du dispositif (802) comprend :
poster une notification sur un réseau social,
poster une notification sur un site web, ou
poster un message sur l'avatar d'un utilisateur dans un monde virtuel.

3. Procédé mis en œuvre par ordinateur (800) pour présenter une notification d'un contenu poussé reçu sur un écran d'accueil (500) d'un dispositif, l'écran d'accueil comprenant un en-tête (510) et un pied de page (520), le procédé comprenant :
afficher au moins une icône (530) dans le pied de page (520) sur une interface utilisateur de dispositif, chaque icône correspondant à une application respective ;
recevoir la notification du contenu poussé reçu pour une application au niveau du dispositif (802), la notification étant reçue lorsque le dispositif est en couverture ;
présenter la notification en utilisant un premier indicateur sur l'icône (530) correspondant à l'application ;
afficher une mini-icône (512) correspondant à l'application dans l'en-tête (510) ;
présenter la notification en utilisant un second indicateur au niveau de la mini-icône (512), le second indicateur au niveau de la mini-icône étant affichable lorsque le pied de page n'est pas représenté ;
recevoir une sélection de l'icône ayant le premier indicateur (806) ou de la mini-icône ayant le second indicateur ; et
naviguer, lorsque le dispositif est hors couverture et dès la réception d'une sélection de l'icône ayant le premier indicateur ou de la mini-icône ayant le second indicateur, directement vers un écran qui contient des chemins de navigation qui concernent uniquement le contenu poussé disponible sur le dispositif.

4. Procédé mis en œuvre par ordinateur selon la revendication 3, dans lequel la réception de la notification du contenu poussé reçu au niveau du dispositif (802) comprend :
poster une notification sur un réseau social,
poster une notification sur un site web, ou
poster un message sur l'avatar d'un utilisateur dans un monde virtuel.

5. Dispositif de communication mobile ayant une interface utilisateur, le dispositif de communication mobile comprenant :
au moins un processeur ;
au moins un support lisible par ordinateur en communication avec le processeur ; et
un module de programme pour présenter une notification d'un contenu poussé reçu sur un écran d'accueil (500), l'écran d'accueil comprenant un en-tête (510) et un pied de page (520), le module de programme étant stocké sur l'au moins un support et étant exécutable pour :
afficher au moins une icône (530) dans le pied de page (520) sur l'interface utilisateur, chaque icône correspondant à une application respective ;
recevoir la notification du contenu poussé reçu pour une application au niveau du dispositif de communication mobile (802), la notification étant reçue lorsque le dispositif est en couverture ;
présenter la notification en utilisant un premier indicateur sur l'icône (530) correspondant à l'application ;
afficher une mini-icône (512) correspondant à l'application dans l'en-tête (510) ;
présenter la notification en utilisant un second indicateur au niveau de la mini-icône (512), le second indicateur au niveau de la mini-icône étant affichable lorsque le pied de page n'est pas représenté ;
recevoir une sélection de l'icône ayant le premier indicateur (806) ou de la mini-icône ayant le second indicateur ; et
naviguer, lorsque le dispositif est hors couverture et dès la réception d'une sélection de l'icône ayant le premier indicateur ou de la mini-icône ayant le second indicateur, directement vers un écran qui contient un contenu poussé stocké localement.

6. Dispositif de communication mobile selon la revendication 5, dans lequel la présentation de la notification du contenu poussé reçu au niveau du dispositif de communication mobile (804) comprend :
poster une notification sur un réseau social,
poster une notification sur un site web, ou
poster un message sur l'avatar d'un utilisateur dans un monde virtuel.

7. Dispositif de communication mobile ayant une interface utilisateur, le dispositif de communication mobile comprenant :
au moins un processeur ;
au moins un support lisible par ordinateur en communication avec le processeur ; et
un module de programme pour présenter une notification d'un contenu poussé reçu sur un écran d'accueil (500), l'écran d'accueil comprenant un en-tête (510) et un pied de page (520), le module de programme étant stocké sur l'au moins un support et étant exécutable pour :
afficher au moins une icône (530) dans le pied de page (520) sur l'interface utilisateur, chaque icône correspondant à une application respective ;
recevoir la notification du contenu poussé reçu pour une application au niveau du dispositif de communication mobile (802), la notification étant reçue lorsque le dispositif est en couverture ;
présenter la notification en utilisant un premier indicateur sur l'icône (530) correspondant à l'application ;
afficher une mini-icône (512) correspondant à l'application dans l'en-tête (510) ;
présenter la notification en utilisant un second indicateur au niveau de la mini-icône (512), le second indicateur au niveau de la mini-icône étant affichable lorsque le pied de page n'est pas représenté ;
recevoir une sélection de l'icône ayant le premier indicateur (806) ou de la mini-icône ayant le second indicateur ; et
naviguer, lorsque le dispositif est hors couverture et dès la réception d'une sélection de l'icône ayant le premier indicateur ou de la mini-icône ayant le second indicateur, directement vers un écran qui contient des chemins de navigation qui concernent uniquement le contenu poussé disponible sur le dispositif.

8. Dispositif de communication mobile selon la revendication 7, dans lequel la présentation de la notification du contenu poussé reçu au niveau du dispositif de communication mobile (804) comprend :
poster une notification sur un réseau social,
poster une notification sur un site web, ou
poster un message sur l'avatar d'un utilisateur dans un monde virtuel.

9. Produit programme d'ordinateur pour un dispositif de communication mobile ayant une interface utilisateur, le produit programme d'ordinateur comprenant :
au moins un support lisible par ordinateur ; et
au moins un module de programme pour présenter une notification d'un contenu poussé reçu sur un écran d'accueil (500), l'écran d'accueil comprenant un en-tête (510) et un pied de page (520), l'au moins un module de programme étant stocké sur l'au moins un support et étant exécutable pour :
afficher au moins une icône (530) dans le pied de page (520) sur l'interface utilisateur, chaque icône correspondant à une application respective ;
recevoir la notification du contenu poussé reçu pour une application au niveau du dispositif de communication mobile (802), la notification étant reçue lorsque le dispositif est en couverture ;
présenter la notification en utilisant un premier indicateur sur l'icône correspondant à l'application ;
afficher une mini-icône (512) correspondant à l'application dans l'en-tête (510) ;
présenter la notification en utilisant un second indicateur au niveau de la mini-icône (512), le second indicateur au niveau de la mini-icône étant affichable lorsque le pied de page n'est pas représenté ;
recevoir une sélection de l'icône ayant le premier indicateur (806) ou de la mini-icône ayant le second indicateur ; et
naviguer, lorsque le dispositif est hors couverture et dès la réception d'une sélection de l'icône ayant le premier indicateur ou de la mini-icône ayant le second indicateur, directement vers un écran qui contient un contenu poussé stocké localement.

10. Produit programme d'ordinateur selon la revendication 9, dans lequel la présentation de la notification du contenu poussé reçu au niveau du dispositif de communication mobile comprend :
poster une notification sur un réseau social,
poster une notification sur un site web, ou
poster un message sur l'avatar d'un utilisateur dans un monde virtuel.

11. Produit programme d'ordinateur pour un dispositif de communication mobile ayant une interface utilisateur, le produit programme d'ordinateur comprenant :
au moins un support lisible par ordinateur ; et
au moins un module de programme pour présenter une notification d'un contenu poussé reçu sur un écran d'accueil (500), l'écran d'accueil comprenant un en-tête (510) et un pied de page (520), l'au moins un module de programme étant stocké sur l'au moins un support, et étant exécutable pour :
afficher au moins une icône (530) dans le pied de page (520) sur l'interface utilisateur, chaque icône correspondant à une application respective ;
recevoir la notification du contenu poussé reçu pour une application au niveau du dispositif de communication mobile (802), la notification étant reçue lorsque le dispositif est en couverture ;
présenter la notification en utilisant un premier indicateur sur l'icône correspondant à l'application ;
afficher une mini-icône (512) correspondant à l'application dans l'en-tête (510) ;
présenter la notification en utilisant un second indicateur au niveau de la mini-icône (512), le second indicateur au niveau de la mini-icône étant affichable lorsque le pied de page n'est pas représenté ;
recevoir une sélection de l'icône ayant le premier indicateur (806) ou de la mini-icône ayant le second indicateur ; et
naviguer, lorsque le dispositif est hors couverture et dès la réception d'une sélection de l'icône ayant le premier indicateur ou de la mini-icône ayant le second indicateur, directement vers un écran qui contient des chemins de navigation qui concernent uniquement le contenu poussé disponible sur le dispositif.

12. Produit programme d'ordinateur selon la revendication 11, dans lequel la présentation de la notification du contenu poussé reçu au niveau du dispositif de communication mobile comprend :
poster une notification sur un réseau social,
poster une notification sur un site web, ou
poster un message sur l'avatar d'un utilisateur dans un monde virtuel.
